# EUROPEAN PATENT APPLICATION

(11) **EP 1 327 666 A1**
(43) Date of publication of application: **16.07.2003**
(21) Application number: 01963487.2
(22) Date of filing: 06.09.2001
(51) Int. Cl.: C08L 79/00, C08K 3/04, C08K 7/00, C08J 5/18, G03G 15/14

(54) **POLYIMIDE RESIN COMPOSITION AND, POLYIMIDE PRODUCT FORMED INTO FILM AND INTERMEDIATE TRANSFER BELT COMPRISING THE SAME**

(30) Priority: 13.09.2000 JP 2000277961; 02.03.2001 JP 2001057617
(71) Applicant: Kaneka Corporation, Osaka-shi, Osaka 530-0005 (JP)
(72) Inventor: NOJIRI, Hitoshi, Otsu-Shi, Shiga 520-0104 (JP); YANAGIDA, Masami, Otsu-Shi, Shiga 520-0004 (JP); SEZAKI, Koji, Toriigawa-Cho, Otsu-Shi, Shiga 520-0854 (JP)
(74) Representative: HOFFMANN - EITLE
(86) International application number: JP0107753
(87) International publication number: WO02022740

(57) **Abstract**

The present invention provides a polyimide intermediate transfer belt having a medium resistivity, little non-uniformity, and high insulating reliability, in which its volume resistivity at the measured voltage of 100V is within the range of 1 × 10⁶ to 1 x 10¹² Ω ·cm because of the containing of 0.5 to 20 parts by weight of carbon black and 5 to 40 parts by weight of a plate-like or pillar-like electrically conductive powder based on 100 parts by weight of a polyimide resin. It is possible to obtain a most suitable intermediate transfer belt by the formation of a fluorocarbon resin layer including an electrically conductive material where the surface resistivity is within the range of 1 × 10⁸ to 1 × 10¹³ Ω/cm².

## Description

### TECHNICAL FIELD

The present invention relates to a resin composition having a medium resistivity and polyimide product formed into film (hereinafter referred as "film-like polyimide product" ), and a polyimide intermediate transfer belt having a steady medium resistivity and excellent transcriptional properties made of the resin composition.

### BACKGROUND ART

Polyimide resins have been widely used in various fields because of their superior heat resistance, solvent resistance, high-strength, and high-durability. A variety of optional characteristics have been demanded in polyimide resins because of these uses. While high insulating properties are one of inherent characteristics of polyimides, polyimides are comparatively susceptible to be electrically charged. Polyimides are often used for electric and electronic parts and static electricity accumulated on these electric and electronic parts may cause a problem. Since there is a possibility of static electricity producing improper operation in integrated circuit, particularly, it is an important problem to be solved for peripheral materials of semiconductors to remove static electricity.

It is well known that transfer belts, intermediate transfer belts, and fixed belts, or the like require characteristics having a medium resistivity due to their functions to transfer toners and such characteristics are a significant challenge to quality control. A term herein referred to as "a medium resistivity" means a resistivity within the range from 10⁶ to 10¹² Ω · cm. It is possible to maintain insulating properties while lowering the resistivity to a certain level by controlling this medium resistivity (10⁶ to 10¹² Ω · cm).

Conventionally, ethylene-tetrafluoroethylene copolymer (ETFE) belts or the like have been used for this use. ETFE is, however, a comparatively flexible resin, so that permanent deformation may occur on ETFE after a long-term use. Moreover, ETFE belt has needed to be quite thick to guarantee a certain level of mechanical strength. Furthermore, the use of a high heat resistance resin is needed to sustain high temperatures when fixing because belts combining transfer and fixing functions have recently been used.

In view of such needs, trials to lower the resistivity by the addition of each kind of electrically conductive materials have been variously made using a polyimide resin as a base resin. For example, JP No.2-110138 discloses a product including an aromatic polyimide matrix and a finely divided conductive particle material, in which the particle material is uniformly dispersed and 10 to 45 weight % of the entire product exists. JP No. 63-311263 proposes an intermediate transfer body for an electrograph recorder constructed of an aromatic polyimide film containing carbon black of 5 to 20 weight %, in which a surface resistivity Rs (Ω/square) is within the range of 10⁷ ≤Rs ≤ 10¹⁵.

Regardless of these various trials, it is still a difficult problem to steadily control the resistivity of polyimide to be medium due to the reasons to be described later.

Among a variety of resins, polyimides themselves have a high resistivity. For example, while acrylic resins exhibit a volume resistivity of about 10¹⁴ Ω · cm, the total aromatic linear polyimides exhibit a volume resistivity of not less than 10¹⁶ Ω · cm. To lower the resistivity, an electrically conductive material with a low intrinsic resistivity compared to other resins requires to be used as a filler. This may, however, easily results in lowered insulating reliability and it is difficult to constantly control the resistivity within an intermediate range. Particularly, a film-like product, beltlike and tubular-shaped products have a thin thickness, so that partial non-uniformity causes noticeable degradation in insulating reliability, which leads to further difficulties in controling the resistivity. Moreover, the filler degrades strength of the belt and that causes damages of the belt after use.

It was known to be particularly difficult to control the resistivity of polyimides within the range of a volume resistivity from 1 × 10⁷ to 1 x 10¹⁰ Ω · cm particularly required when used as intermediate transfer belts for electrograph recorders.

Even if the screening test using a variety of electrically conductive materials as fillers is performed to seek the effects of stably controlling resistivity, however, favorable results were not obtained in a single electrically conductive material. As mentioned above, it is assumed that the volume resistivity of polyimide resins can be lowered by the mixture of electrically conductive materials, but it has revealed to be impossible to obtain an intermediate transfer belt essentially made of polyimide resin with a favorable medium resistivity and high insulating reliability in accordance with aims of the present invention.

As a result of studies of various combinations of materials to solve the above-mentioned problems and obtain specific effects by a combination of a variety of materials, it is an object of the present invention to provide a polyimide resin base-intermediate transfer belt with a medium resistivity and high insulating reliability.

### DISCLOSURE OF THE INVENTION

A polyimide resin composition according to the present invention contains from 0.5 to 20 parts by weight of carbon black and from 5 to 40 parts by weight of a plate-like or pillar-like electrically conductive powder based on 100 parts by weight of a polyimide resin.

A film-like polyimide product according to the present invention comprises a polyimide resin composition containing from 0.5 to 20 parts by weight of carbon black and from 5 to 40 parts by weight of a plate-like or pillar-like electrically conductive powder based on 100 parts by weight of a polyimide resin, wherein the volume resistivity at the measured voltage of 100V is within the range of 1×10⁶ to 1×10¹² Ω · cm.

Further, the film-like polyimide product according to the present invention may have a volume resistivity within the range of 1×10⁷ to 1×10¹⁰ Ω · cm at the measured voltage of 100V.

Moreover, the film-like polyimide product contains carbon black that is ketjen black and its mixing amount may be from 0.5 to 5 parts by weight based on 100 parts by weight of a polyimide resin.

Furthermore, the film-like polyimide product may be an electrical conductivity possessed micaceous material made by a plate-like or pillar-like electrically conductive powder.

In addition, the film-like polyimide product may be tubular shaped or belt shaped.

The intermediate transfer belt according to the present invention comprises a film-like polyimide product.

An intermediate transfer belt according to the present invention has a fluorocarbon resin layer including an electrically conductive material on its surface, wherein the surface resistivity may be within the range of 1×10⁸ to 1×10¹³ Ω · cm.

According to the present invention, an intermediate transfer belt having a stably favorable medium resistivity and high insulating reliability free from damages with use can be obtained.

### BEST MODE FOR CARRYING OUT THE INVENTION

Next, a preferred embodiment of the present invention will be described in detail.

In a polyimide resin composition according to the present invention, a polyimide resin basically contains at least carbon black and an electrically conductive powder as fillers. The mixing amount of carbon black is 0.5 to 20 parts by weight based on 100 parts by weight of a polyimide resin. The electrically conductive powder is a plate-like or pillar-like form and its mixing amount is 5 to 40 parts by weight based on 100 parts by weight of a polyimide resin.

The above-mentioned polyimide resin composition is used in the film-like polyimide product of the present invention and the mixing amount of carbon black and a plate-like or pillar-like electrically conductive powder in the polyimide resin within the range of the above-mentioned mixing amount is optimally selected. The film-like product has a volume resistivity within a specific range, within the range between 1 × 10⁶ and 1 × 10¹² Ω · cm at the measured voltage of 100V.

When such a film-like product of the present invention is used for an intermediate transfer belt, preferable printability is obtained and imperfect transfer and image turbulence is within the service permissible scope, furthermore, there is no damage to the belt when used. Moreover, when carbon black and a plate-like or pillar-like electrically conductive powder which are optimally selected within the range of the above-mentioned mixing amount are mixed in the polyimide resin to be used, and the film-like product thereof has a volume resistivity within a specific range; within the range between 1 × 10⁶ and 1 × 10¹² Ω · cm at the measured voltage of 100V, there are few partial defects such that the intermediate transfer belt partially has parts with an abnormal volume resistivity, furthermore, the intermediate transfer belt achieves to have further preferable printability and has no imperfect transfer and image turbulence that may cause a problem when used.

The polyimide resin according to the present invention means a general resin having an imido bond in its structure and includes not only resins known generally as polyetherimido, polyesterimido, and polyamideimido, but also as a copolymer and polymer blend with other resins.

General polyimides are usually produced by using a diamine compound and tetracarboxylic dianhydride as monomers.

For example, a diamine compound includes

**H**_{**2**}**N―X―NH**_{**2**}

, wherein X represents a divalent group selected from the following organic groups: 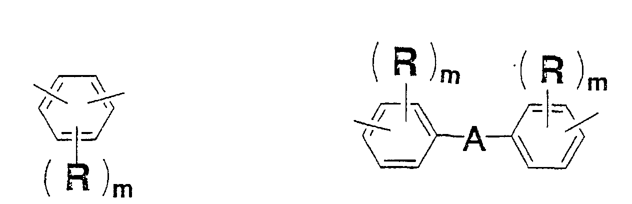 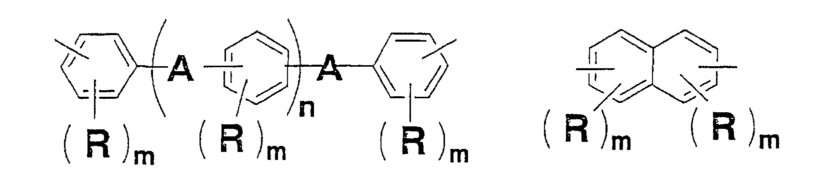 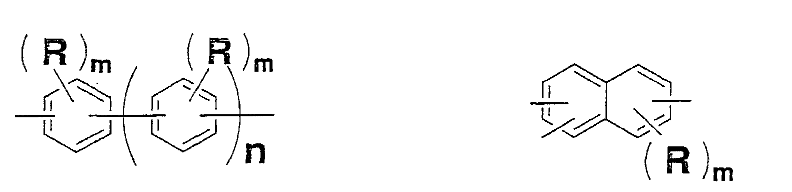 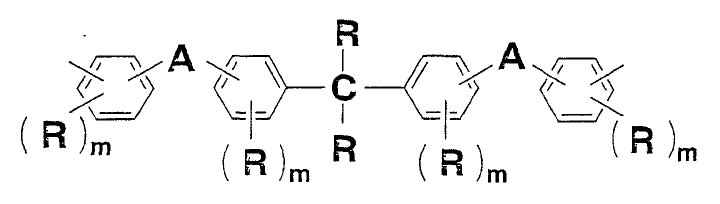 (Wherein R, which is the same or different, and represents at least one group selected from the groups consisting of hydrogen, halogen, -CH₃, -OCH₃, -O(CH₂)ₙCH₃-, -(CH₂)ₙCH₃, -CF₃, or -OCF_{3.} A is the same or different, and A represents at least one group selected from the groups consisting of a single bond, O, S, C=O, (CH₂)ₙ, SO₂, N=N, NHCO, or C(O)O, m is an integer from 1 to 4, n is an integer not less than 1.) and a variety of monomers shown in the formula may be used. In one example, a variety of monomers represented as follows can be used as tetracarboxylic dianhydrides: 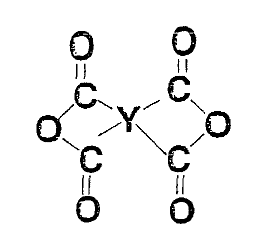 In the formula, Y is a tetravalent group selected from the following: 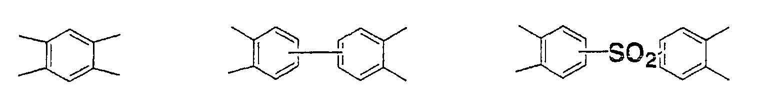 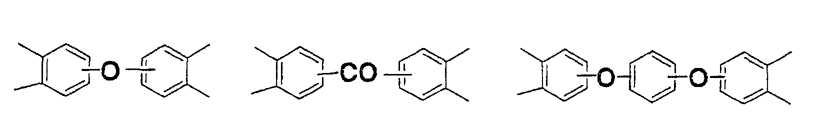 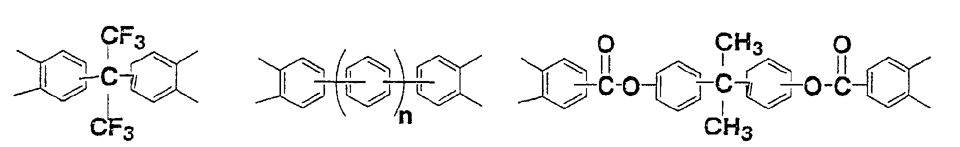 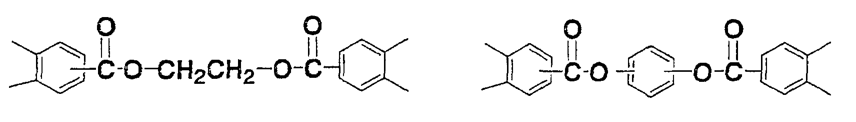 (In the formula, n is an integer not less than 1.)
A variety of characteristics can be materialized by a combination of these groups and the combination can be selected as conditions demand, such as usage and processing method.

When diamines including a large number of folded chains (preferably not less than two) and/or wherein an aromatic ring has a bond at a meta position and at least two rings of tetracarboxylic dianhydrides are used, thermoplastic polyimides can be obtained, which makes it possible to provide a resin composition that enables a thermal melting product. Examples of these combinations include: a combination of 2,2'- bis(4-aminophenoxy phenyl)propane and oxidiphthalic dianhydride, a combination of bis(2-(4-aminophenoxy) ethoxy)ethane and 3,3',4,4'-benzophenone tetracarboxylic dianhydride, or a combination of 2,3',3'4'-biphenyl tetracarboxylic dianhydrides and 4'4'-diamino diphenyl ether, and a combination of oxidiphthalic dianhydride and 3,4'-diaminophenyl ether or the like.

Polyimides ordinarily have high water absorption due to its imido group, but characteristics of relatively low water absorption can be provided to polyimides by the combination of specific monomers. For example, there are polyimides having a structure wherein a plurality of benzene nuclei are bonded by at least two ester bonds as tetracarboxylic dianhydrides.

### More particularly, among dianhydrides are shown by the following:

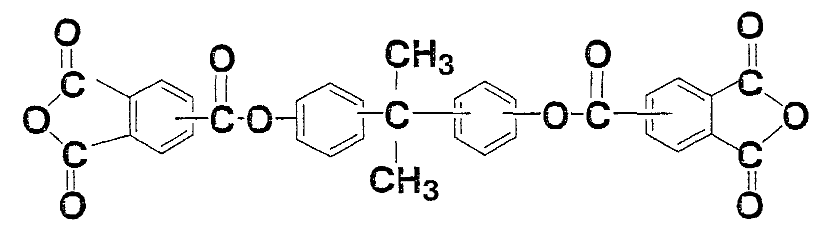

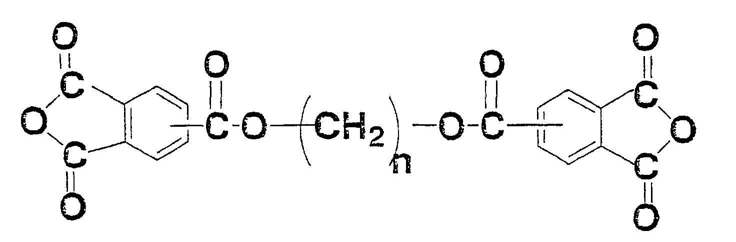

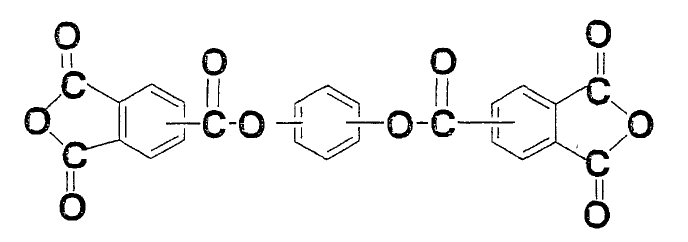

In this case, relatively long-chain monomers are preferably used as diamine compounds to lower the imido group content.
Examples of these monomers include: 1,4-bis(4-aminophenoxy) benzene and its positional isomer, and 2,2'-bis (4-aminophenoxy phenyl)propane or the like.

Dianhydrides and diamines having a large number of long and folded chains simultaneously enable to have the above-mentioned thermoplasticity but they are not suitable to have sufficiently heat resistance required. In this case, monomers, which are long chains and having a linear structure entirely or partially, are suitable. Among tetracarboxylic dianhydrides are monomers with a structure showing by 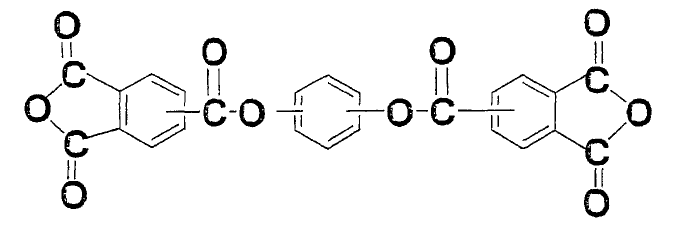 (TMHQ: p-phenylene-bis trimellitic dianhydrides). These monomers include folded chains, but their structures may have mostly linear conformation as a whole. Regardless of a large number of its bondings, it is found that relatively stiff polyimides are made from this monomer. Diamines having a structure to attach a biphenylene structure to a naphthalene structure through the medium of an ether bond may be selected as diamines having a relatively stiff structure in spite of being long-chain. Examples of diamines include 4,4'-bisaminophenoxy biphenyl. Polyimides having relatively low water absorption without noticeable thermoplastic properties can be obtained.

Further, copolymerization of the above-mentioned monomers and general-purpose pyromellitic dianhydrides, benzophenone tetracarboxylic dianhydrides, paraphenylene diamines, and 4,4'-diamino diphenyl ether, or the like may be enable to design of polyimides with arbitrary characteristics.

In the polyimide resin composition according to the present invention, a powder is mixed with the polyimide resin. The powder is preferably an inorganic substance having conductivity. In comparison with the case of using polyimide simply, the polyimide in resin composition that is used as a base resin requires higher toughness due to an inevitable drop in toughness with the addition of an inorganic substance. Unless the polyimides themselves have sufficient toughness, an inevitable drop in toughness because of the addition of the powder might not make the polyimides practically applied. In view of toughness, the polyimides consisted of pyromellitic acid dianhydride and 4,4'-diaminodiphenyl ether are the most preferable. Such a structure of the polyimides combines sufficient heat resistance and high toughness and further, under wide range of processing conditions, has well-balanced properties so that these properties can be maintained.

The above-mentioned powder is preferably in a finely divided shape of plate-like or pillar-like.

A variety of existing carbon black is usable to be mixed with the polyimide resins, if only the carbon black has conductivity. Examples of the carbon black include: furnace black, acetylene black, thermal black, and channel black or the like. Among them, the carbon black called ketjen black has a large specific surface area, which is one kind of furnace black, is preferably used, because the loading of this carbon black may be less than others.

Examples of the plate-like electrically conductive powder to be used in the present invention include a substance which possesses electrical conductivity by coating a micaceous material with tin oxide doped with antimony, or a scaly metallic powder and the like. Examples of the pillar-like electrically conductive powder include a material, which possesses electrical conductivity produced by coating titanium oxide with similar tin oxide and antimony. Especially, a plate-like electrically conductive powder is preferably used, more particularly, a material in which the surface of micaceous material possesses electrical conductivity.

0.5 to 20 parts by weight of carbon black, preferably 0.5 to 10 parts by weight of carbon black, and, 5 to 40 parts by weight, preferably 10 to 35 parts by weight of a plate-like or pillar-like electrically conductive powder are used based on 100 parts by weight of polyimide resins. Particularly, when ketjen black is used as carbon black, the mixing amount of 0.5 to 5 parts by weight of ketjen black is preferable based on 100 parts by weight of a polyimide resin. At least one kind is used for each material, but two or more kinds may be used for each material.

When carbon black only is added in some ten parts by weight, it is possible to lower the resistivity, however, the resistivity may not be controlled within the intermediate range, furthermore, the insulating reliability has not ensured because adding so much quantity of carbon black is inevitable to have the aggregation of carbon black remained.

The inventors of the present invention have attained that the use of two kinds of electrically conductive materials of the above-mentioned carbon black and a plate-like or pillar-like electrically conductive powder may make it possible to stably obtain a medium volume resistivity from 1×10⁶ to 1×10¹² Ω. cm, further from 1×10⁷ to 1×10¹⁰ Ω ·cm.

The intermediate resistance stably develops by the addition of a small quantity of carbon black to this mixture.

The mechanism, although its details are not known at present, is assumed that the polyimide product attains the potential possibility of decreasing the resistance of the whole materials with addition of a plate-like or pillar-like electrically conductive material in quite a great quantity, but its insulation breakdown caused by perfect conducting has not appeared because the electrically conductive material is discontinuous, and then, that it is provided an effective decrease in resistivity to be within the required range because a structure may be formed so that a small quantity of carbon black fills the space between the discontinuous conductive materials.

Also, it is possible further to add other non-conductive inorganic powder to this mixed system. Various kinds of materials, such as short diameter particulate matters like titanium oxide and silica, a plate-like and scaly materials including mica series, such as swelling mica and non-swelling mica, short-fiberous or whisker materials like barium titanate, potassium titanate, are used as non-conductive fillers. Nonconductive fillers are added to control characteristics such as elastic coefficient. It is also possible to stabilize the resistivity by further highly preventing the conductor from being agglutinated because non-conductive powder appropriately promotes the dispersion of the electrically conductive powder.

Various methods may be taken to disperse a plate-like or pillar-like electrically conductive powder and carbon black to be added in a polyimide resin.

When a polyimide resin is soluble in a solution, a method for dispersing a powder-like material by adding a powder-like material or a previously dispersed material in a polyimide resin solved and mixing with a stirring wing or with a mixer, such as three rolls. On the contrary, a method for adding a powder of polyimide soluble in a solvent or a pellet or the like to the material produced by previously dispersing a powder-like material in a solvent to be fully mixed is also possible. As a method for previously dispersing, the method for fully promoting dispersion with an ultrasonic disperser by adding the powder-like material to the solvent is effective.

Particularly, the shape of the plate-like powder may be destroyed upon receipt of excessive shearing force, so that the method without three rolls is preferable.

When the polyimide resin is insoluble in a solvent, a method for mixing and milling in the same manner after adding the above-mentioned preliminary dispersion to the polyamic acid solution that is a precursor of polyimide can also be taken. At this time, it is also possible to use a dispersing agent to promote dispersibility of a solid powder within a range in which characteristic deterioration of polyimides does not noticeably occur.

A gradual addition of polyamic acid solution to the preliminary dispersion while stirring makes dispersibility further improved than the above-mentioned inverse-order procedure.

Another method to obtain particularly favorable dispersibility is previously adding a powder-like material to a solvent and fully dispersing with an ultrasonic disperser or the like, and then adding a diamine compound and a dianhydride compound as materials of polyimides (polyamic acid) to the dispersions for polymerization reaction. According to this method, the dispersibility is very good on a microscopic level with using an ultrasonic dispersion, simultaneously, the dispersibility on a macroscopic level is also very good because the stirring is always performed during after the initial dispersion of the solid powder to polymerization. When the solution is a polyimide solution, after the molding of the polyimide solution in a belt shape, the solvent may be vaporized by heating or by combination of heating and pressure reduction, to obtain a polyimide product.

If the solution is a polyamic acid solution, a belt can be obtained by the similar process to that of the polyimide solution. In this case, prior to heating, to promote imidization, an acid anhydride like an acetic anhydride as a dehydrating agent and tertiary amines as a catalyst can be used singly or in combination. The combination of an acid anhydride and tertiary amines or only tertiary amines is more preferably used because an acid anhydride may not only promote imidization reaction but also may cause a cleavage of the main chain of a polyamic acid molecular. Since curing reaction starts immediately after mixing of the polyamic acid solution added an acid anhydride and tertiary amines, it becomes difficult to deal with the polyamic acid solution when taking a batch-style manufacturing process. Accordingly, the addition of tertiary amines only is the most preferably adopted.

The above-mentioned polyimide resin composition, wherein at least two kinds of fillers are added to the polyimide resin, is molded into a film-like product.

An example of a producing method for each kind of shape will now be described in detail. Among methods for producing into a film or a sheet are the following:

The polyimide or polyamic acid resin solution, wherein each of the above-mentioned inorganic components has been dispersed, is applied onto an endless belt while the thickness of the polyimide resin solution is controlled by using a comma coater and a doctor blade or the like. The resin solution is dried by heating with heated air until the solution has self-supporting properties or the like and is then peeled off from the endless belt. Both ends of the width of the peeled semi-dried film are secured with pins and clips and then pass through a heating furnace at sequentially higher temperatures to obtain a film-like product. Alternatively, a method for peeling off the resin solution from the support sheet or a method for removing the support sheet by etching or the like may be adopted after the application of the resin solution onto a continuous sheet-like support like a metal and passing it into a heating furnace to obtain a fixed film in a sheet or a polyimide product in a sheet state.

Examples of a method for producing into a belt or a tubular shape include the method mentioned below. It is the easiest method to obtain a belt or a tube by molding into a film or a sheet by the above-mentioned method or the like and cutting in a predetermined length and width and then joining them together in a belt or a tube. An adhesive and an adhesive tape or the like may be used for the joining, but inconvenience may be caused depending on the uses due to inevitable steps and cut-lines at the connection.

One specific example of methods for producing into a belt will now be shown. A method for applying a resinous solution onto the inner surface or outer surface of a cylinder-type mold and vaporizing a solvent by heating to be dried or drying under reduced pressure, and then heating up to the final burning temperature or peeling off the molding and inserting it into the outer periphery of another mold to finally define the inner diameter and heating up to the final burning temperature may be used. When a resinous solution is applied onto a cylinder-type mold, it is also effective to rotate the mold to reduce non-uniformity in thickness due to sags or runs of the resinous solution. The final burning temperature may be selected in dependance on the structure of polyimide and heat resistance of carbon added. When heating and burning non-thermoplastic polyimide from the state of polyamic acid, preferably, the burning temperature may be between about approximately 300°C and 450°C. To develop toughness of a resin as characteristics of a non-thermoplastic polyimide resin, heating is needed at not less than a certain temperature. When the heating temperature is too high, the conductive effect of carbon black is eliminated, therefore, the maximum burning temperature is more preferably within the range of 350°C to 420°C. The burning temperature of thermoplastic polyimide is preferably between -20°C and 100°C against the glass transition temperature of the polyimide.

A polyimide belt formed in this way may be used as an intermediate transfer belt without modification, but a surface layer, which is adjusted in resistance on the external layer, may be provided on it to have further preferable characteristics as an intermediate transfer belt.

More particularly, an intermediate transfer belt which is the second embodiment of the present invention comprises a polyimide resin composition containing 0.5 to 20 parts by weight of carbon black, 5 to 40 parts by weight of a plate-like or pillar-like electrically conductive powder based on 100 parts by weight of a polyimide resin, in which a surface layer with modification of resistance having a surface resistivity of 1 x 10⁸ to 1× 10¹³ Ω/cm² is formed on the surface of a polyimide belt having a volume resistivity within the range of 1 × 10⁶ to 1 × 10¹² Ω · cm.

The resistivity of this surface layer is more preferably within the range of 1 × 10⁹ to 1 × 10¹² Ω/cm². In addition, fluorocarbon resin is preferably used as a matrix resin to transfer to the paper of a toner smoothly. The surface layer formed by the addition of an electrically conductive material to the fluorocarbon resin is further preferable. For the material to adjust the surface resistivity within the range, a material similar to the above-described material added to the polyimide layer may be used. In comparison to a polyimide resin, a fluorocarbon resin layer can be easily controlled the resistivity and has conventional quality performance of resistivity controlled within the medium range. Accordingly, it is also possible to control the resistivity within the above-mentioned targeted range by the addition of carbon black only. Similarly, it is also possible to add other variety of electrically conductive materials. Moreover, a combination of electrically conductive materials and non-electrically conductive fillers may be similarly used to perform for the purpose of adding other characteristics of thermal conductivity or the like as appropriate.

As mentioned above, a preferred embodiment according to the present invention has been described so far, but the present invention is not limited to this embodiment.

Next, an explanation will now be given to an example of the present invention. The volume resistivity was measured at 10V, 30V, 50V, and 100V for samples 1 to 4 which were cutting 4 pieces of sheets of 10 cm × 10 cm of a polyimide belt, in the way of setting these samples under the atmosphere of 60% of humidity RH for 48 hours at the temperature of 23°C, using a digital super-high resistance/micro-ammeter R8340 and a resistivity chamber R12702A manufactured by Advantest Cooperation. The surface resistivity at 100V was similarly measured.

### [Example 1]

1,100 g of dimethylformamide (hereinafter referred to as DMF) and 6.6 g of carbon black 3030B manufactured by Mitsubishi Chemical Corporation and 41.1 g of Dentole TM-200 (Mica base, tin oxide coating doped with antimony) manufactured by Otsuka Chemical Co., Ltd. were mixed to be uniformly dispersed by ultrasonic dispersion. 86.2 g of 4, 4'-diaminodiphenyl ether (hereinafter referred to as DADPE) powder was added to dissolve this dispersed solution fully while stirring under a nitrogen air current in a water bath at about 10°C. After gradually adding a 91.0 g of pyromellitic dianhydride (hereinafter referred to as PMDA) powder while continuing the stirring, and stirred for 30 minutes. To this, a PMDA solution which 2.8 g of PMDA had been dissolved in 40 g of DMF was gradually added. When the viscosity measured at 23°C reached about 2,000 poise, the addition of the PMDA solution was stopped and stirring was completed after the continuation of stirring for another 30 minutes.

6 g of isoquinoline and 200 g of polyamic acid solution obtained after the above-mentioned polymerization were mixed with vigorously stirring under reduced pressure, after that, a vanish of this solution was extruded to the inner surface of a glass tube having an inner diameter of 82 mmφ from a moving circular screwing die having an outer diameter of 80 mmφ and spacing of about 1 mm between lips while the glass tube was rotated at the same time. Holding the glass tube rotated, the glass tube was dried at 25°C and 10 Torr. for 12 hours in a vacuum oven. And then a semi-dried polyamic acid belt was taken out from the glass tube and fit onto a porous metallic cylinder-mold having an outer diameter of 80 mmφ where a release agent had been sprayed on its surface, after then, heated for polyimidization at 100°C for 10 minutes, 200°C for 5 minutes, 250°C for 5 minutes, 300°C for 5 minutes, and 380°C for 5 minutes. A polyimide intermediate transfer belt with a thickness of about 85 µm was taken out by air pressing from the inside of the porous metallic mold.

The carbon black 3030B has 4 parts by weight and Dentole TM-200 that is a plate-like electrically conductive powder has 25 parts by weight based on 100 parts by weight of the polyimide solid content in this polyimide belt.

Table 1 shows results of measured volume resistivity of this polyimide belt (Example 1-1 to Example 1-4).

### [Example 2]

1,100 g of dimethylformamide (DMF), 16.4 g of carbon black 3030B manufactured by Mitsubishi Chemical Corporation and 32.9 g of conductive titanium oxide ET-500W manufactured by Ishihara Sangyo Kaisha Ltd. (rutil crystal, titanium oxide base, tin oxide coating doped with antimony) were mixed and uniformly dispersed by ultrasonic dispersion. 86.2 g of 4, 4'-diaminodiphenyl ether (DADPE) powder was added to fully dissolve this dispersed solution while stirring this solution under a nitrogen air current in a water bath at about 10°C. After gradually adding 91.0 g of pyromellitic dianhydride (PMDA) powder while continuing the stirring, and stirred for another 30 minutes. To this, a PMDA solution which 2.8 g of PMDA had been dissolved in 40 g of DMF was gradually added, when the viscosity measured at 23°C reached about 2,000 poises, the addition of the PMDA solution was stopped and stirring was completed after the continuation of stirring for another 30 minutes.

A polyimide intermediate transfer belt was prepared in the same manner as in Example 1 except the use of this polyamic acid solution.

The carbon black 3030B has 10 parts by weight and ET-500W, which is a pillar-like electrically conductive powder, has 20 parts by weight based on 100 parts by weight of the polyimide solid content in this belt.

Table 1 shows results of evaluating the volume resistivity of this belt in the same manner as in Example 1.

### (Example 3)

1,100 g of dimethylformamide (DMF), 2.46 g of Ketjen black EC-600JD manufactured by Lion Corporation and 41.1 g of Dentole TM-200 (mica base, tin oxide coating with antimony) manufactured by Otsuka Chemical Co., Ltd. were mixed and uniformly dispersed by ultrasonic dispersion. 86.2 g of 4, 4'-diaminodiphenyl ether (DADPE) powder was added to fully dissolve this dispersed solution while stirring this solution under a nitrogen air current in a water bath at about 10°C. After gradually adding 91.0 g of pyromellitic dianhydride (PMDA) powder while continuing the stirring, the stirring was continued for 30 minutes. To this, a PMDA solution which 2.8 g of PMDA had been dissolved in 40 g of DMF was gradually added, when the viscosity measured at 23°C reached about 2,000 poises, the addition of the PMDA solution was stopped and stirring was completed after the continuation of stirring for another 30 minutes.

A polyimide intermediate transfer belt was prepared in the same manner as in Example 1 except the use of this polyamic acid solution.

Table 1 shows results of evaluating the volume resistivity of this belt in the same manner as in Example 1.

The ketjen black has 1.5 parts by weight and the Dentole TM-200 that is a plate-like electrically conductive powder has 25 parts by weight based on 100 parts by weight of the polyimide solid content in this belt.

### (Example 4)

300 g of poly-fluoro vinylidene resin KYNAR 301F was dissolved in 1 kg of DMF. 30 g of carbon black 3030B was added to 500 g of DMF to be dispersed by ultrasonic dispersion. The resultant dispersion was poured into the DMF and the stirring was conducted for 12 hours. Next, a polyimide belt was prepared in the same manner as in Example 1 except the belt had a thickness of 65 µm. Evaluation results of the volume resistivity in this polyimide belt measured at 100V in the same manner as in Example 1 are shown in Table 1. The above-mentioned fluorocarbon resinous solution was uniformly sprayed on the surface of the polyimide belt with an air spray gun so that the thickness of the solution may be about 15 µm after burning. The belt was inserted into a core body and was placed in an oven so that the surface of the belt would not touch the oven to be heated at 120°C for 5 minutes and 380°C for 10 minutes. The belt was gradually cooled down to room temperature. The belt was taken out of the oven and removed from the core body to obtain a targeted intermediate transfer belt. The surface resistivity of the fluorocarbon resin coating surface of this intermediate transfer belt turned out to be 2.4 × 10⁹ Ω/square by making a measurement.

### (Example 5)

A polyimide intermediate transfer belt with a thickness of about 85 µm was obtained in the same manner as in Example 1 to be used as a polyimide intermediate belt except that the amount of the electrically conductive powder Dentole TM-200 to be added was 32.9 g. The plate-like electrically conductive powder Dentole TM-200 has 20 parts by weight based on 100 parts by weight of the polyimide solid content in the belt.

Evaluation results of the volume resistivity of this polyimide belt measured at 100V obtained in the same manner as in Example 1 are shown in Table 1.

### (Comparative Example 1)

A polyimide intermediate transfer belt having a thickness of about 85 µm was obtained in the same manner as in Example 1 to be used as a polyimide intermediate belt except that the amount of the electrically conductive powder Dentole TM-200 (carbon black was not added) to be added was 49.3 g. The Dentole TM-200 has 30 parts by weight based on 100 parts by weight of the polyimide solid content in this belt.

Evaluation results of the resistivity of this belt obtained in the same manner as in Example 1 are shown in Table 2.

### (Comparative Example 2)

A belt was prepared and evaluation was performed on its resistivity in the same manner as in Comparative Example 1 except for the use of conductive titanium oxide ET-500W instead of Dentole TM-200. Table 2 shows the results.

### (Comparative Example 3)

A belt was prepared and evaluation was performed on its resistivity in the same manner as in Comparative Example 1 except for the use of carbon black 3030B instead of Dentole TM-200. Table 2 shows the results.

When all images obtained are good, they are described as "Good", when there are images with some disturbance, but that is in practical use within an allowance, they are described as "Passing", and when the images have partially transfer faults and disturbance or when the belt is damaged, it is described as "Poor" in Tables 1 and 2 for each of Examples and Comparative Examples.

**(Table 1)**

| Example | Volume resistivity (Ω · cm) | | | | Printability |
|---|---|---|---|---|---|
| | 10V | 30V | 50V | 100V | |
| Example 1-1 | 5.1E+09 | 1.6E+09 | 9.3E+08 | 4.2E+08 | |
| Example 1-2 | | | | 5.0E+08 | |
| Example 1-3 | | | | 3.8E+08 | Good |
| Example 1-4 | | | | 4.1E+08 | |
| Example 2-1 | 1.8E+10 | 7.8E+09 | 5.2E+09 | 2.1E+09 | |
| Example 2-2 | | | | 1.3E+09 | Good |
| Example 2-3 | | | | 1.2E+09 | |
| Example 2-4 | | | | 3.7E+09 | |
| Example 3-1 | 8.9E+08 | 7.3E+08 | 6.9E+08 | 4.1E+08 | |
| Example 3-2 | | | | 3.8E+08 | Good |
| Example 3-3 | | | | 3.1E+08 | |
| Example 3-4 | | | | 2.0E+08 | |
| Example 4-1 | | | | 1.1E+09 | |
| Example 4-2 | | | | 8.1E+08 | Good |
| Example 4-3 | | | | 1.9E+09 | |
| Example 4-4 | | | | 4.8E+09 | |
| Example 5-1 | | | | 2.1E+11 | |
| Example 5-2 | | | | 8.7E+10 | Passing |
| Example 5-3 | | | | 1.6E+11 | |
| Example 5-4 | | | | 2.2E+10 | |

**(Table 2)**

| | Volume resistivity (Ω · cm) | | | | Printability |
|---|---|---|---|---|---|
| | 10V | 30V | 50V | 100V | |
| Comparative Example 1-1 | 4.2E+13 | 9.8E+12 | 7.9E+12 | 3.6E+12 | |
| Comparative Example 1-2 | | | | 4.0E+13 | Poor |
| Comparative Example 1-3 | | | | 1.8E+12 | |
| Comparative Example 1-4 | | | | 2.7E+12 | |
| Comparative Example 2-1 | 5.5E+15 | 1.7E+15 | 7.3E+14 | 3.7E+14 | |
| Comparative Example 2-2 | | | | 6.5E+14 | Poor |
| Comparative Example 2-3 | | | | 2.1E+14 | |
| Comparative Example 2-4 | | | | 1.6E+15 | |
| Comparative Example 3-1 | 1.0E+10 | 6.7E+09 | 4.3E+09 | 9.3E+08 | |
| Comparative Example 3-2 | | | | 2.2E+11 | |
| Comparative Example 3-3 | | | | Electrical | |
| Comparative Example 3-4 | | | | breakdown Electrical breakdown | Poor |

### Industrial Applicability

The present invention can provide an intermediate transfer belt for a polyimide electronic photograph having a medium resistivity and few partial faults used for producing a high-quality copying machine and a printer.

There have thus been shown and described a novel polyimide resin composition and a novel film-like polyimide product and a novel intermediate transfer belt made of the polyimide resin composition which fulfill all the objects and advantages sought therefor. Many changes, modifications, variations and other uses and applications of the subject invention will, however, become apparent to those skilled in the art after considering this specification which discloses the preferred embodiments thereof. All such changes, modifications, variations and other uses and applications which do not depart from the spirit and scope of the present invention are deemed to be covered by the invention, which is to be limited only by the claims which follow.

## Claims

1. A polyimide resin composition containing 0.5 to 20 parts by weight of carbon black and 5 to 40 parts by weight of a plate-like or pillar-like electrically conductive powder based on 100 parts by weight of a polyimide resin.

2. A polyimide product formed into film (hereinafter referred as film-like polyimide product) comprising a polyimide resin composition containing 0.5 to 20 parts by weight of carbon black and 5 to 40 parts by weight of a plate-like or pillar-like electrically conductive powder based on 100 parts by weight of a polyimide resin, wherein the volume resistivity at the measured voltage of 100V is within the range of 1 × 10⁶ to 1× 10¹² Ω · cm.

3. The polyimide product according to claim 2, having a volume resistivity within the range of 1 × 10⁷ to 1× 10¹⁰ Ω · cm at the measured voltage of 100V.

4. The polyimide product according to claim 2 or 3, wherein said carbon black is ketjen black and its mixing amount is 0.5 to 5 parts by weight based on 100 parts by weight of a polyimide resin.

5. The polyimide product according to any one of claims 2 to 4, wherein said plate-like or pillar-like electrically conductive powder is an electrical conductivity possessed micaceous material.

6. The polyimide product according to any one of claims 2 to 5, wherein the shape of said product is tubular shaped or belt shaped.

7. An intermediate transfer belt comprising a film-like polyimide product according to claim 6.

8. The belt according to claim 7, having a fluorocarbon resin layer including an electrically conductive material on the surface, wherein the surface resistivity of said fluorocarbon resin layer is within the range of 1 × 10⁸ to 1× 10¹³ Ω /cm².
